# EUROPÄISCHE PATENTSCHRIFT

(11) **EP 1 390 214 B1**
(45) Veröffentlichungstag und Bekanntmachung des Hinweises auf die Patenterteilung: **15.04.2009**
(21) Anmeldenummer: 02761850.3
(22) Anmeldetag: 26.02.2002
(51) Int. Cl.: B44C 1/10

(54) **PRÄGEFOLIE, VERFAHREN ZUR HERSTELLUNG DER PRÄGEFOLIE UND ZUR ÜBERTRAGUNG EINES ETIKETTS VON DER PRÄGEFOLIE AUF EIN SUBSTRAT**
STAMPING FILM, METHOD FOR THE PRODUCTION THEREOF AND FOR TRANSFERRING A LABEL FROM SAID STAMPING FILM TO A SUBSTRATE
FEUILLE D'ESTAMPAGE, PROCEDE POUR SA PRODUCTION ET POUR LE TRANSFERT D'UNE ETIQUETTE DE LA FEUILLE D'ESTAMPAGE SUR UN SUBSTRAT

(30) Priorität: 28.02.2001 DE 10109519
(43) Veröffentlichungstag der Anmeldung: 25.02.2004
(73) Patentinhaber: Giesecke & Devrient GmbH, 81677 München (DE)
(72) Erfinder: HOFFMANN, Lars, 85354 Freising (DE)
(74) Vertreter: Klunker . Schmitt-Nilson . Hirsch
(86) Internationale Anmeldenummer: PCT/EP2002/002038
(87) Internationale Veröffentlichungsnummer: WO 2002/083430

(56) Entgegenhaltungen:
- EP-A- 0 195 857
- EP-A- 0 249 896
- WO-A-00/68013
- WO-A-96/01187
- DE-A- 2 649 479
- DE-A- 3 308 831

## Beschreibung

Die Erfindung betrifft das Gebiet des Applizierens von Etiketten auf beliebige Substrate, insbesondere von optisch variablen Sicherheitselementen, wie zum Beispiel Hologramme, auf Wertpapiere, wie zum Beispiel Banknoten. Die Erfindung betrifft konkret ein Verfahren zur Herstellung einer dafür geeigneten Prägefolic, eine entsprechende Prägefolie und ein Verfahren zum Übertragen von Etiketten von dieser Prägefolie auf ein Substrat.

Das Applizieren der Etiketten auf Wertpapieren oder beliebigen anderen Gegenständen dient der Produktsicherung, indem die Etiketten besondere, nur schwierig zu fälschende Echtheitsmerkmale besitzen, wie zum Beispiel holographische Beugungsstrukturen. Für das Applizieren der Etiketten auf die jeweiligen Substrate wurden bereits zahlreiche Verfahren vorgeschlagen, denen gemeinsam ist, dass die Etiketten mittels eines Prägestempels, zumeist ein Heißprägestempel ("hot stamping"), von einer Transferfolie auf die Substratoberfläche übertragen werden, wobei die Transferfolie regelmäßig nicht mit übertragen wird.

Die grundlegende Struktur einer dafür geeigneten Prägefolie wird in DE 26 49 479 B2 beschrieben, wonach eine Heißprägefolie aus einer Trägerfolie besteht, auf welche wenigstens eine üblicherweise transparente Lackschicht aufgebracht wird. In die Oberfläche dieser Lackschicht werden dann mittels einer gravierten Walze Beugungsstrukturen in Form eines räumlichen, reliefartigen Musters eingebracht. Die so geprägte Schicht wird mit einer dünnen Metallschicht bedeckt, um den visuellen, beugungsoptisch wirksamen, z.B. holographischen Effekt deutlicher sichtbar zu machen. Um eine so auf der Prägefolie erzeugte Beugungsstruktur im Heißprägeverfahren auf das Substrat übertragen zu können, wird die Metallschicht mit einer Kleber- bzw. Heißsiegelschicht versehen. Die Kleberschicht der Heißprägefolie wird dann mit der Substratoberfläche in Kontakt gebracht und ihre Vernetzung wird mittels eines Heißprägestempels von der Rückseite der Trägerfolie her veranlasst. Der Kleber erzeugt eine feste Verbindung zwischen dem Substrat und der mit der Metallschicht bedeckten Lackschicht, die stabiler ist als die zwischen der Trägerfolie und der Lackschicht wirkenden Adhäsionskräfte. Dieser Effekt kann zusätzlich verstärkt werden, indem zwischen der Trägerfolie und der Lackschicht eine Trennschicht vorgesehen wird, die das Ablösen der Schichten von der Trägerfolie erleichtert. Zusätzlich kann zwischen der mit der Metallschicht bedeckten Lackschicht und der Kleberschicht eine Haftvermittlerschicht vorgesehen werden, um die Verbindung zwischen Kleberschicht und Metallschicht bzw. Substrat und Etikettenschichten zu verbessern. Sobald die Kleberschicht ausreichend vernetzt bzw. getrocknet ist, kann die Trägerfolie abgezogen werden, wobei die Etikettenschichten im Bereich der aktivierten Klebstoffschicht auf dem Substrat verbleiben. Die Form des Heißprägestempels, der die Klebstoffschicht aktiviert, bestimmt somit den Umriss des von der Prägefolie übertragenen Etiketts.

Es gibt verschiedene Alternativen zu diesem Verfahren, wonach statt eines speziell geformten Prägestempels beispielsweise eine ganz normale Laminierwalze verwendet werden kann. In diesen Fällen wird die Kleberschicht so arrangiert, dass nur der gewünschte Bereich der Lackschicht auf das Substrat übertragen wird. So wird beispielsweise in der WO 96/01187 vorgeschlagen, die Kleberschicht auf der Heißprägefolie bereits in entsprechend strukturierter Etikettenform aufzubringen, wobei zur besseren Konturierung der Etiketten zusätzlich auch die Lackschicht passgenau zur strukturierten Kleberschicht auf der Trägerfolie vorgesehen sein kann.

In der WO 93/05224 und in der WO 92/20533 wird demgegenüber vorgeschlagen, die Kleberschicht in der gewünschen Etikettenform direkt auf das Substrat aufzubringen.
Eine weitere Alternative wird in der WO 93/16888 vorgeschlagen, wonach die Klebstoffschicht zwar vollflächig auf die Lackschicht der Heißprägefolie aufgebracht wird, die nicht auf das Substrat zu übertragenden Bereiche dieser Klebstoffschicht jedoch vor dem Applikationsschritt deaktiviert werden, indem sie mit einer schnell trocknenden Farbe aus Harz entsprechend maskiert werden.

Alle vorgenannten Verfahren haben jedoch den Nachteil, dass beim Übertrag die Hcißschmelzkleberschicht durch Wärmezufuhr erweicht wird, um sie klebfähig zu machen, wobei strukturierte Kleberschichten in ihrem Randbereich verlaufen und nichtstrukturierte, lokal erwärmte Kleberschichten über den Randbereich der lokalen Erwärmung hinaus erweichen, so dass in beiden Fällen das übertragene Etikett keine scharfen Konturen aufweist.

Ein Verfahren, mittels welchem scharf konturierte Etiketten von einer Trägerfolie auf ein Substrat übertragen werden können, ist in der DE 4411 404 beschrieben. Dort werden die Etiketten exakt in der später gewünschten Umrissform direkt auf der Trägerfolie hergestellt. Eine solche Prägefolie ist aber nur schwierig auf Vorratsrollen wickelbar und daher in der Handhabung aufwändig.

In der DE 41 30 896 A1 wird ein anderer Weg beschrieben, um klar konturierte Etiketten auf das Substrat zu übertragen. Demnach werden die zu übertragenden Etiketten ausgestanzt, während sie sich noch auf der Trägerfolie befinden, ohne dass dabei die Trägerfolie beschädigt wird, und die nicht zu übertragenden Bereiche der Etikettenschicht werden vor dem Übertragungsvorgang von der Trägerfolie abgezogen. Dieses Verfahren ist maschinell aufwändig.

Aus EP 0 249 896 A1 ist eine Prägefolie, insbesondere Heißprägefolie, mit einer Trägerfolie und einer Dekorschicht bekannt, bei der die Dekorschicht mindestens eine Lackschicht und gegebenenfalls eine Kleberschicht, eine zwischen der Trägerfolie und der Lackschicht vorgesehene Trennschicht und zwischen der Lackschicht und der Kleberschicht eine Metall- oder Farbschicht und eine Haftvermittlerschicht aufweist. Die Trägerfolie besteht aus einer thermoplastischen Polyester-Dreischichtfolie mit einer äußeren, einer zentralen und einer inneren Polyesterschicht, wobei die zentrale Polyesterschicht einen niedrigeren Schmelzpunkt aufweist als die äußere und die innere Polyesterschicht. Die Trägerfolie wird mit einer Prägewalze heißgeprägt und anschließend auf der inneren Oberfläche der Trägerfolie, die der Dekorschicht zugewandt ist, eine Dekorschicht aufgebracht. Nach dem Übertragen der Dekorschicht auf eine Unterlage und nach dem Ablösen der Trägerfolie von der auf der Unterlage befestigten Dekorschicht befindet sich das räumliche Muster an der freien Oberfläche der Dekorschicht, so dass sich ein guter optischer Eindruck der geprägten Folie ergibt

Aus WO 00/68013 A1 ist eine Transferfolie, bestehend aus einer mehrlagigen Dekorlage auf einem Trägerfilm bekannt, die unter Einwirkung von Druck und ggf. Wärme bereichsweise auf ein Substrat übertragen wird. Auf der dem Trägerfilm gegenüberliegenden Oberfläche der Dekorlage befindet sich eine Kleberschicht, die durch Strahlungsenergie aktivierbar ist. Hierfür weist die Dekorlage in bestimmten Flächenbereichen eine Absorptionsschicht auf, die Strahlungsenergie zur Aktivierung der Kleberschicht absorbiert. Die Absorptionsschicht hat somit die Aufgabe, Strahlungsenergie, die auf die Dekorlage der Folie auftrifft, zu absorbieren und an die anschließende Bereiche der Kleberschicht abzugeben. Auf diese Weise wird der Kleber der Kleberschicht in den entsprechenden Bereichen aktiviert bzw. zumindest voraktiviert, so dass er nach Bestrahlung in diesen Bereichen klebrig ist.

Aufgabe der vorliegenden Erfindung ist es daher, eine einfach handhabbare Prägefolie vorzuschlagen, mit welcher es möglich ist, ohne besonderen maschinellen Aufwand scharf konturierte Hologrammetiketten auf ein Substrat, insbesondere eine Banknote, zu übertragen.

Eine weitere Aufgabe der Erfindung besteht darin, entsprechende Verfahren zur Herstellung einer solchen Prägefolie und zur Übertragung eines Etiketts von einer solchen Prägefolie auf ein Substrat vorzuschlagen.

Diese Aufgaben werden erfindungsgemäß durch die Kombination der in den anhängenden, unabhängigen Patentansprüchen angegebenen Merkmale gelöst. In davon abhängigen Ansprüchen sind vorteilhafte Ausgestaltungen der Erfindung angegeben.

Im Gegensatz zum Stand der Technik sieht die Erfindung vor, dass zur Strukturierung der Etikettenform zwischen der Kleberschicht und der gegebenenfalls mit einer Metallschicht versehenen Lackschicht bereichsweise eine Haftvermittlerschicht angeordnet wird. Das heißt, die Haftvermittlerschicht wird räumlich auf die Abmessungen der aus der Etikettenschicht herauszulösenden Einzeletiketten beschränkt. Der Begriff "Etikettenschicht" steht hierbei für den kontinuierlich auf einer Trägerschicht angeordneten Schichtaufbau eines Sicherheitselements. Bei dieser Etikettenschicht handelt es sich vorzugsweise um den üblichen Schichtaufbau eines Prägehologramms. Selbstverständlich kann die Erfindung auch bei beliebigen anderen Prägefolien verwendet werden, aus welchen strukturierte Etiketten mit einer vorbestimmten Umrisskontur auf ein Substrat übertragen werden.

Die der Erfindung zugrunde liegende Idee besteht darin, unterschiedlich starke Verbundkräfte zwischen der Kleberschicht und der Etikettenschicht einerseits sowie der Kleberschicht und der Haftvermittlerschicht andererseits als Bruchstelle für eine kantengenaue Etikettenapplikation zu nutzen. Denn die Haftung zwischen Kleber- und Haftvermittlerschicht ist höher als die Haftung zwischen Kleberschicht und der direkt angrenzenden Etikettenschicht. Zudem ist auch die Verbindung zwischen Trägerfolie und den Etikettenschichten stärker als zwischen Kleberschicht und den Etikettenschichten. Auf diese Weise bleiben auch bei vollflächiger Aktivierung der Kleberschicht nur die mit der Haftvermittlerschicht versehenen Bereiche der Etikettenschichten am Substrat haften. Alle übrigen Bereiche werden mit der Trägerfolie abgezogen.

Um bei der Wahl des Kleberschichtmaterials unabhängiger zu sein, sieht eine alternative Ausführungsform der Erfindung vor, dass die Bereiche der Etikettenschicht, die nicht mit der erfindungsgemäßen Haftvermittlerschicht belegt sind, mit einer Trennschicht aufgefüllt werden. Diese unterstützt den Effekt, dass nur im Bereich der Haftvermittlerschicht ein fester Verbund mit der Kleberschicht entsteht und erleichtert zudem die Handhabung der Prägefolie, da die Schichtdicke der Prägefolie auf diese Weise gleichmäßig gestaltet werden kann.

Die Kleberschicht muss nicht notwendigerweise Bestandteil der Prägefolie sein, sie kann auch, oder im Bedarfsfall auch nur zusätzlich, unmittelbar auf dem Substrat aufgebracht werden. Außerdem kann die Kleberschicht auf die konkreten Bereiche der zu übertragenden Etiketten beschränkt sein.

Die Übertragung von Etiketten von der erfindungsgemäßen Prägefolie erfordert, wie bereits erläutert, keinen exakt konturierten Prägestempel. Der Prägestempel, der vorzugsweise als Heißprägestempel ausgebildet ist, sollte lediglich eine größere Fläche besitzen als die Fläche des zu übertragenden Etiketts. Im überstehenden Bereich des Stempels kommt es beim Appliziervorgang zu keiner festen Verbindung zwischen der Etikettenschicht und der Kleberschicht bzw. im Falle der vorgenannten alternativen Ausführungsform der Erfindung zwischen Trennschicht und Kleberschicht. Durch das Eigengewicht des Substrats, das im Bereich der Haftvermittlerschicht fest an der zu übertragenden Etikettenschicht haftet, reißt die Etikettenschicht entlang der Außenkante des Haftvermittlers. Auf diese Weise wird lediglich der gewünschte Motivbereich der Etikettenschicht auf das Substrat appliziert, wohingegen die Etikettenschicht außerhalb des gewünschten Motivbereichs auf der Trägerfolie verbleibt und mit der Trägerfolie auf einer Abfallrolle aufgewickelt wird.

Um einen leichteren Riss zu erzielen, kann es unter Umständen sinnvoll sein, im Etikettenschichtaufbau vorhandene Lackschichten, wie z.B. eine Prägelackschicht, außerhalb des strukturierten Motivbereichs dünner zu gestalten als im Motivbereich. Um ein leichteres Loslösen des Etiketts von der Trägerfolie zu erzielen, kann zwischen Trägerfolie und Etikettenschicht ferner eine zusätzliche Trennschicht vorgesehen sein.

Die erfindungsgemäße Prägefolie ist einfach herstellbar und leicht handhabbar. Sie kann insbesondere ohne weiteres auf großen Vorratsrollen aufgewickelt werden, insbesondere wenn alle Schichten, ausgenommen die Haftvermittlerschicht, vollflächig auf der Trägerschicht aufgetragen werden. Die Dickenschwankungen der Haftvermittlerschicht bereiten beim Wickeln keine Probleme, da sie nur 1 bis 3,5 % der gesamten Prägefoliendicke ausmacht. Im Falle, dass die Bereiche zwischen der nur bereichsweise aufgebrachten Haftvermittlerschicht mit einer Trennschicht aufgefüllt sind, ergeben sich ohnehin keine Dickenschwankungen. Im anderen Falle werden die Dickenschwankungen teilweise von der Kleberschicht ausgeglichen, sofern die Kleberschicht Bestandteil der Prägefolie ist und nicht direkt auf dem Substrat aufgebracht wird.

Nachfolgend wird die Erfindung beispielhaft anhand der Figur beschrieben. Darin zeigen:
- Figur 1: eine Banknote mit appliziertem Etikett in Aufsicht,
- Figur 2: einen Querschnitt durch eine erfindungsgemäße Prägefolie gemäß einer ersten Ausführungsform,
- Figur 3: einen Querschnitt durch eine erfindungsgemäße Prägefolie gemäß einer zweiten Ausführungsform und
- Figur 4: einen Querschnitt durch eine Banknote mit applizierten Etiketten.

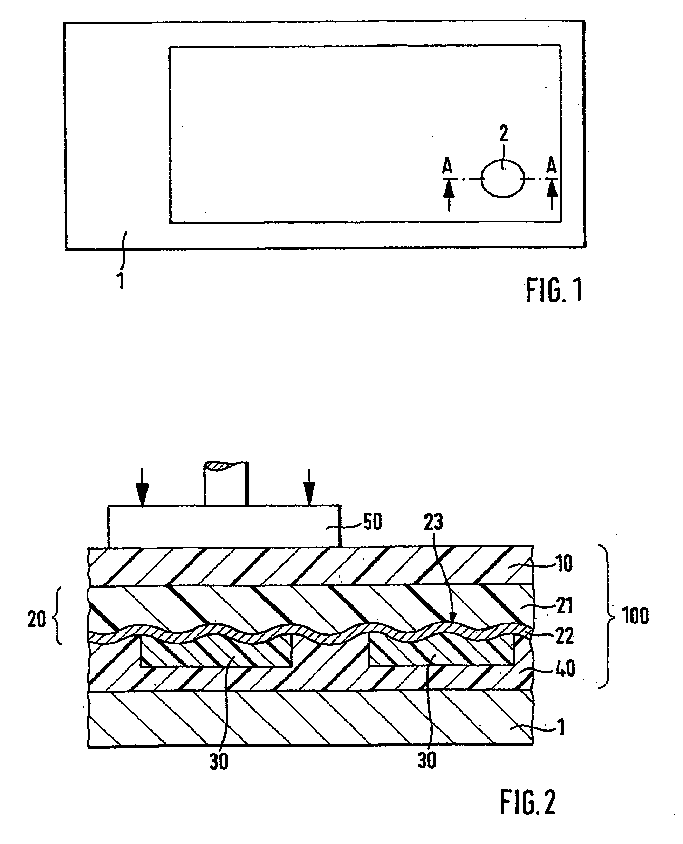

Figur 1 zeigt eine Banknote 1 mit einem darauf applizierten Etikett 2. In Figur 2 ist eine Heißprägefolie 100 im Querschnitt dargestellt, aus der das Etikett 2 herausgelöst und auf die Banknote 1 übertragen wird. Die Prägefolie ist folgendermaßen aufgebaut:

Auf einer Trägerfolie 10 ist eine Etikettenschicht 20 vorgeschen. Die Etikettenschicht 20 umfasst eine einseitig geprägte, transparente Lackschicht 21 und eine die geprägte Oberfläche der Lackschicht 21 abdeckende Metallschicht 22. Die geprägte Oberfläche der Lackschicht 21 ist als spezielles dreidimensionales Relief 23 ausgebildet und wirkt als optisch variable, beispielsweise holographische Beugungsstruktur, deren optischer Eindruck durch die Metallschicht 22 verstärkt wird. Die Etikettenschicht 20 ist vollflächig mit einer Heißkleberschicht 40 versehen, wobei in Teilbereichen zwischen der Etikettenschicht 20 und der Heißkleberschicht 40 eine Haftvermittlerschicht 30 vorgesehen ist.

Die zwischen der Haftvermittlerschicht 30 und der Kleberschicht 40 einerseits und der Haftvermittlerschicht 30 und der Etikettenschicht andererseits wirkenden Verbundkräfte sind vergleichsweise hoch gegenüber den Verbundkräften zwischen der Etikettenschicht 20 und der Kleberschicht 40.

Die Kontur der Haftvermittlerschicht 30 wird dabei entsprechend dem zu übertragenden Etikett 2 gewählt.

Die Trägerfolie hat vorzugsweise eine Dicke von 10 bis 40 µm. Die vollflächig aufgebrachte, metallisierte Lackschicht besteht vorzugsweise aus einem UV-härtbarem Lack und hat vorzugsweise eine Dicke von etwa 2 bis 5 µm. Die Haftvermittlerschicht 30 hat eine Dicke von etwa 0,5 bis 1,5 µm. Und die vollflächig aufgebrachte Heißkleberschicht 40 hat vorzugsweise eine Dicke von etwa 3 bis 7 µm.

Für das Applizieren des einzelnen Etiketts 2 auf die Banknote 1 bzw. das endlose Banknotenpapier wird die Kleberschicht 40 der Prägefolie 100 mit der Oberfläche der Banknote 1 in Kontakt gebracht. Mittels eines Heißprägestempels 50 wird von der Rückseite der Heißprägefolie 100 Druck und Termperatur über die Trägerfolie 10 und die Etikettenschicht 20 auf die Heißkleberschicht 40 übertragen. Dadurch geht der erwärmte Bereich des Heißklebers 40 zunächst in einen flüssigen Zustand über und dringt teilweise in die Oberfläche der Banknote ein. Nach dem Aushärten des Klebers besteht im Bereich der Haftvermittlerschicht eine feste Verbindung zwischen der Banknote und der Etikettenschicht 20. Vorzugsweise ist die Fläche des Heißprägestempels 50 etwas größer ausgebildet als die einzelnen Bereiche der Haftvermittlerschicht 30 und steht entsprechend über die äußere Kontur der Bereiche der Haftvermittlerschicht 30 über, wie in Figur 2 gezeigt.

Mittels der durch das Aushärten der aktivierten Kleberschicht 40 erzeugten festen Verbindung zwischen der Banknote und dem entsprechenden Bereich der Haftvermittlerschicht 30 sowie der festen Verbindung zwischen der Haftvermittlerschicht 30 und der Etikettenschicht 20 wird erreicht, dass die Prägelackschicht 21 mit der dünnen Metallschicht 22 entlang der Außenkante des Haftvermittlers 30 beim Abziehen der Trägerfolie 10 von der Banknote 1 abreißt.

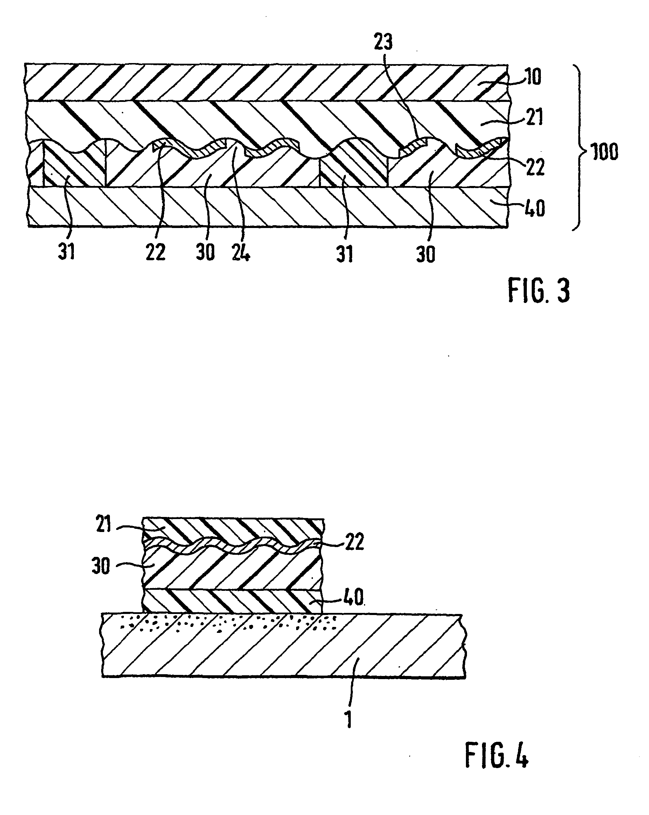

Voraussetzung für das Abreißen der Prägelackschicht 21 mit der Metallschicht 22 ist allerdings, dass die Verbindung zwischen der im Randbereich der Haftvermittlerschicht 30 ebenfalls aktivierten Kleberschicht 40 wesenlich schwächer ist als im Bereich der Haftvermittlerschicht 30. Sollte diese Voraussetzung aufgrund des verwendeten Klebermaterials nicht gegeben sein, so ist es vorteilhaft, die Zwischenräume zwischen den einzelnen Bereichen der Haftvermittlerschicht 30 mit einem eine Trennschicht 31 bildenden Trennmittelmaterial aufzufüllen, wie in Figur 3 gezeigt ist. Statt eines Prägestempels kann auch eine kontinuierlich arbeitende Rollenprägemaschine verwendet werden, da erfindungsgemäß nur in den mit der Haftvermittlerschicht versehenen Bereichen ein Übertrag der Etikettenschicht auf das Substrat stattfindet.

Die in Figur 3 dargestellte Ausführungsform der Erfindung unterscheidet sich von der in Figur 2 dargestellten Ausführungsform des Weiteren durch die folgenden beiden Merkmale, die in entsprechender Weise einzeln oder gemeinsam genauso bei der Ausführungsform gemäß Figur 2 realisiert werden können.

Demnach ist die Metallschicht 22 nicht vollflächig auf der Lackschicht 21 vorgesehen, sondern lediglich in denjenigen Bereichen, die Bestandteil des zu übertragenden Etiketts sind. Diese Bereiche sind vollständig durch die Haftvermittlerschicht 30 abgedeckt, wodurch die Metallschicht 22 vor Umwelteinflüssen vollständig geschützt wird.

Des Weiteren ist in der Ausführungsform gemäß Figur 3 vorgesehen, dass die Metallschicht 22 Aussparungen 24 aufweist, welche z.B Zeichen oder Muster darstellen können. Die Banknote 1 bzw. das Banknotenmaterial ist hier nicht dargestellt.

In Figur 4 ist die in Fig.1 dargestellte Banknote 1 im Schnitt entlang A - A dargestellt wobei das übertragene Etikett den in Fig. 2 gezeigten Schichtaufbau 20 aufweist. Die in Fig. 2 gezeigte Transferfolie 10 der Heißprägefolie-100 wurde nach der Übertragung des Etiketts 2 entfernt und mit den nicht übertragenen Bestandteilen der Prägefolie auf eine Abfallrolle aufgewickelt. Des Weiteren ist zu erkennen und punktiert dargestellt, dass Kleberbestandteile der Kleberschicht 40 in die Oberfläche der Banknote 1 eingedrungen sind, und zwar auch im Bereich außerhalb der Außenkontur der Haftvermittlerschicht 30.

## Patentansprüche

1. Verfahren zur Herstellung einer Prägefolie (100) mit einer Etikettenschicht (20) zur späteren Übertragung von Einzeletiketten (2) auf ein Substrat (1) umfassend die folgenden Schritte:
- Zurverfügungstellen einer Trägerfolie (10) mit einer Etikettenschicht (20), aus welcher die Einzeletiketten (2) später herausgelöst werden sollen,
- Aufbringen einer Haftvermittlerschicht (30) auf die Etikettenschicht (20) zur Erzeugung einer stabilen Verbindung zwischen der Etikettenschicht (20) und einer Kleberschicht (40),
**dadurch gekennzeichnet, dass** die Haftvermittlerschicht (30) räumlich auf die Abmessungen der später herauszulösenden Einzeletiketten (2) beschränkt wird.

2. Verfahren zum Übertragen eines Etiketts (2) von einer Prägefolie (100) auf ein Substrat (1) umfassend die folgenden Schritte:
- Zurverfügungstellen einer Prägefolie (100) mit einer Etikettenschicht (20), aus welcher einzelne Etiketten (2) nachfolgend herausgelöst werden, und einer auf der Etikettenschicht (20) aufgebrachten Haftvermittlerschicht (30), wobei die Haftvermittlerschicht räumlich auf die Abmessungen der nachfolgend herauszulösenden einzelnen Etiketten (2) beschränkt ist,
- Aufbringen einer Kleberschicht auf die Haftvermittlerschicht (30) oder auf das Substrat (1), sofern die Prägefolie (100) nicht bereits mit einer solchen Kleberschicht (40) ausgestattet ist,
- Inkontaktbringen der Prägefolie, (100) mit dem Substrat (1) im Bereich der Kleberschicht (40) und
- Herauslösen eines Etiketts (2) aus der Etikettenschicht (20) und Übertragen des Etiketts (2) auf das Substrat (1) in einem Prägevorgang.

3. Verfahren nach Anspruch 1 oder 2, **dadurch gekennzeichnet, dass** die Kleberschicht (40) auf die Haftvermittlerschicht (30) aufgebracht wird.

4. Verfahren nach Anspruch 3, **dadurch gekennzeichnet, dass** die Kleberschicht (40) vollflächig auf die Haftvermittlerschicht (30) und dazwischen liegende Bereiche der Etikettenschicht (20) aufgebracht wird.

5. Verfahren nach Anspruch 3, **dadurch gekennzeichnet, dass** die Kleberschicht (40) partiell und zumindest auf die Haf tvermittlerschicht (30) aufgebracht wird.

6. Verfahren nach einem der Ansprüche 1 bis 5, **dadurch gekennzeichnet, dass** zwischen der auf der Etikettenschicht räumlich beschränkt aufgebrachten Haftvermittlerschicht (30) liegende Bereiche mit einer Trennschicht (31) aufgefüllt werden.

7. Verfahren nach einem der Ansprüche 1 bis 6, **dadurch gekennzeichnet, dass** die Kleberschicht aus einem Heißkleber besteht und der Prägevorgang mittels einem Heißprägestempel erfolgt, dessen Stempelfläche größer ist als die Abmessungen der herauszulösenden Etiketten (2).

8. Verfahren nach einem der Ansprüche 1 bis 7, **dadurch gekennzeichnet, dass** die Etikettenschicht (20) Beugungsstrukturen in Form eines Reliefs (23) aufweist.

9. Verfahren nach Anspruch 8, **dadurch gekennzeichnet, dass** die Beugungsstrukturen zumindest partiell mit einer Metallisierung (22) versehen sind.

10. Verfahren nach Anspruch 9, **dadurch gekennzeichnet, dass** die Metallisierung (22) Aussparungen (21) in Form von Zeichen, Mustern besitzt.

11. Verfahren zur Herstellung eines Wertdokuments, **dadurch gekennzeichnet, dass** ein Etikett (2) auf das Wertdokument gemäß Anspruch 2 oder gemäß einem der Ansprüche 3 bis 10 mit 2 übertragen wird, wobei das Wertdokument selbst das Substrat (1) bildet.

12. Verfahren nach Anspruch 11, **dadurch gekennzeichnet, dass** das Wertdokument eine Banknote ist.

13. Prägefolie umfassend:
- eine Trägerfolie (10),
- eine Etikettenschicht (20) auf der Trägerfolie (10), aus welcher Einzeletiketten (2) herauslösbar sind, und
- eine Haftvermittlerschicht (30) auf der Etikettenschicht (20) zur Erzeugung einer stabilen Verbindung zwischen der Etikettenschicht (20) und einer Kleberschicht (40),
**dadurch gekennzeichnet, dass** die Haftvermittlerschicht (30) in voneinander beabstandeten Bereichen entsprechend den herauszulösenden Etiketten auf der Etikettenschicht (20) vorgesehen ist.

14. Prägefolie nach Anspruch 13, **dadurch gekennzeichnet, dass** auf der Haftvermittlerschicht (30) eine Kleberschicht (40) aufgebracht ist.

15. Prägefolie nach Anspruch 14, **dadurch gekennzeichnet, dass** die Kleberschicht (40) vollflächig auf der Haftvermittlerschicht (30) und dazwischen liegenden Bereichen der Etikettenschicht (20) aufgebracht ist.

16. Prägefolie nach Anspruch 14, **dadurch gekennzeichnet, dass** die Kleberschicht (40) partiell und zumindest auf der Haftvermittlerschicht (30) aufgebracht ist.

17. Prägefolie gemäß einem der Ansprüche 13 bis 16, **dadurch gekennzeichnet, dass** die Bereiche zwischen den auf der Etikettenschicht (20) voneinander beabstandet vorgesehenen Bereichen der Haftvermittlerschicht (30) mit einer Trennschicht (31) aufgefüllt sind.

18. Prägefolie nach einem der Ansprüche 13 bis 17, **dadurch gekennzeichnet, dass** die Kleberschicht (40) eine Heißkleberschicht ist.

19. Prägefolie nach einem der Ansprüche 13 bis 18, **dadurch gekennzeichnet, dass** die Etikettenschicht (20) Beugungsstrukturen in der Form eines Reliefs (23) aufweist.

20. Prägefolie nach Anspruch 19, **dadurch gekennzeichnet, dass** die Beugungsstrukturen zumindest partiell mit einer Metallisierung (22) versehen sind.

21. Prägefolie nach Anspruch 20, **dadurch gekennzeichnet, dass** die Metallisierung (22) Aussparungen (24) in Form von Zeichen, Mustern besitzt.

## Claims

1. A method for producing an embossing foil (100) with a label layer (20) for later transfer of single labels (2) to a substrate (1) comprising the following steps:
- providing a carrier foil (10) with a label layer (20) from which the single labels (2) are later to be detached,
- applying an adhesion promoter layer (30) to the label layer (20) for producing a stable bond between the label layer (20) and an adhesive layer (40),
**characterized in that** the adhesion promoter layer (30) is limited spatially to the dimensions of the single labels (2) later to be detached.

2. A method for transferring a label (2) from an embossing foil (100) to a substrate (1) comprising the following steps:
- providing an embossing foil (100) with a label layer (20) from which single labels (2) are subsequently detached, and an adhesion promoter layer (30) applied to the label layer (20), the adhesion promoter layer being limited spatially to the dimensions of the single labels (2) to be subsequently detached,
- applying an adhesive layer to the adhesion promoter layer (30) or to the substrate (1) if the embossing foil (100) is not already equipped with such an adhesive layer (40),
- contacting the embossing foil (100) with the substrate (1) in the area of the adhesive layer (40), and
- detaching a label (2) from the label layer (20) and transferring the label (2) to the substrate (1) in an embossing operation.

3. The method according to claim 1 or 2, **characterized in that** the adhesive layer (40) is applied to the adhesion promoter layer (30).

4. The method according to claim 3, **characterized in that** the adhesive layer (40) is applied all over to the adhesion promoter layer (30) and areas of the label layer (20) located therebetween.

5. The method according to claim 3, **characterized in that** the adhesive layer (40) is applied partially and at least to the adhesion promoter layer (30).

6. The method according to any of claims 1 to 5, **characterized in that** areas located between the adhesion promoter layer (30) applied to the label layer in spatially limited fashion are filled with a separation layer (31).

7. The method according to any of claims 1 to 6, **characterized in that** the adhesive layer consists of a hot-melt adhesive, and the embossing operation is effected by means of a hot stamping die whose die surface is greater than the dimensions of the labels (2) to be detached.

8. The method according to any of claims 1 to 7, **characterized in that** the label layer (20) has diffraction structures in the form of a relief (23).

9. The method according to claim 8, **characterized in that** the diffraction structures are provided at least partially with a metalization (22).

10. The method according to claim 9, **characterized in that** the metalization (22) has gaps (21) in the form of characters, patterns.

11. A method for producing a document of value, **characterized in that** a label (2) is transferred to the document of value according to claim 2 or according to any of claims 3 to 10 with 2, the document of value itself forming the substrate (1).

12. The method according to claim 11, **characterized in that** the document of value is a bank note.

13. An embossing foil comprising:
- a carrier foil (10),
- a label layer (20) on the carrier foil (10) from which single labels (2) are detachable, and
- an adhesion promoter layer (30) on the label layer (20) for producing a stable bond between the label layer (20) and an adhesive layer (40),
**characterized in that** the adhesion promoter layer (30) is provided on the label layer (20) in spaced-apart areas in accordance with the labels to be detached.

14. The embossing foil according to claim 13, **characterized in that** an adhesive layer (40) is applied to the adhesion promoter layer (30).

15. The embossing foil according to claim 14, **characterized in that** the adhesive layer (40) is applied all over to the adhesion promoter layer (30) and areas of the label layer (20) located therebetween.

16. The embossing foil according to claim 14, **characterized in that** the adhesive layer (40) is applied partially and at least to the adhesion promoter layer (30).

17. The embossing foil according to any of claims 13 to 16, **characterized in that** the areas between the areas of the adhesion promoter layer (30) provided spaced-apart on the label layer (20) are filled with a separation layer (31).

18. The embossing foil according to any of claims 13 to 17, **characterized in that** the adhesive layer (40) is a hot-melt adhesive layer.

19. The embossing foil according to any of claims 13 to 18, **characterized in that** the label layer (20) has diffraction structures in the form of a relief (23).

20. The embossing foil according to claim 19, **characterized in that** the diffraction structures are provided at least partially with a metalization (22).

21. The embossing foil according to claim 20, **characterized in that** the metalization (22) has gaps (24) in the form of characters, patterns.

## Revendications

1. Procédé de fabrication d'une feuille à gaufrer (100) comprenant une couche d'étiquette (20) destinée au transfert ultérieur d'étiquettes (2) sur un substrat (1), comprenant les étapes suivantes :
■ Mise à disposition d'un film support (10) pourvu d'une couche d'étiquette (20) dont doivent ensuite être prélevées les étiquettes (2),
■ Application d'une couche d'accrochage (30) sur la couche d'étiquette (20) pour la génération d'une liaison stable entre la couche d'étiquette (20) et une couche d'adhésif (40),
**caractérisé en ce que** la surface occupée par la couche d'accrochage (30) est limitée aux dimensions des étiquettes (2) devant être ensuite prélevées.

2. Procédé de transfert d'une étiquette (2) d'une feuille à gaufrer (100) à un substrat (1), comprenant les étapes suivantes :
■ Mise à disposition d'une feuille à gaufrer (100) comprenant une couche d'étiquette (20) dont sont ensuite être détachées des étiquettes (2), et d'une couche d'accrochage (30) appliquée sur la couche d'étiquette (20), la surface occupée par la couche d'accrochage étant limitée aux dimensions des étiquettes (2) devant être ensuite détachées,
■ Application d'une une couche d'adhésif (40) sur la couche d'accrochage (30) ou sur le substrat (1), dans la mesure où la feuille à gaufrer (100) n'est pas déjà pourvue d'une telle couche d'adhésif (40),
■ Mise en contact de la feuille à gaufrer (100) avec le substrat (1) dans la zone de la couche d'adhésif (40) et
■ Prélèvement d'une étiquette (2) à partir de la couche d'étiquette (20) et transfert de l'étiquette (2) sur le substrat (1) lors d'un processus de gaufrage.

3. Procédé selon la revendication 1 ou 2, **caractérisé en ce que** la couche d'adhésif (40) est appliquée sur la couche d'accrochage (30).

4. Procédé selon la revendication 3, **caractérisé en ce que** la couche d'adhésif (40) est appliquée sur toute la surface de la couche d'accrochage (30) et des zones de la couche d'étiquette (20) se trouvant entre la couche d'accrochage.

5. Procédé selon la revendication 3, **caractérisé en ce que** la couche d'adhésif (40) est appliquée partiellement et au moins sur la couche d'accrochage (30).

6. Procédé selon une des revendications de 1 à 5, **caractérisé en ce que** des zones se trouvant entre les zones de la couche d'étiquette recouvertes d'une couche d'accrochage (30) sur une surface limitée sont entièrement enduites d'une couche de séparation (31).

7. Procédé selon une des revendications de 1 à 6, **caractérisé en ce que** la couche d'adhésif consiste en un thermocollant et **en ce que** le processus de gaufrage a lieu au moyen d'un poinçon de gaufrage à chaud dont la surface de gaufrage dépasse les dimensions de l'étiquette à prélever (2).

8. Procédé selon une des revendications de 1 à 7, **caractérisé en ce que** la couche d'étiquette (20) comporte des structures de diffraction sous forme d'un relief (23).

9. Procédé selon la revendication 8, **caractérisé en ce que** les structures de diffraction sont pourvues au moins partiellement d'une métallisation (22).

10. Procédé selon la revendication 9, **caractérisé en ce que** la métallisation (22) comprend des évidements (21) sous forme de signes, dessins.

11. Procédé de fabrication d'un document de valeur, **caractérisé en ce qu'**une étiquette (2) est transférée sur le document de valeur selon la revendication 2 ou selon une des revendications de 3 à 10 avec 2, le document de valeur constituant lui-même le substrat (1).

12. Procédé selon la revendication 11, **caractérisé en ce que** le document de valeur est un billet de banque.

13. Feuille à gaufrer comprenant :
■ un film support (10),
■ une couche d'étiquette (20) se trouvant sur le film support (10) et dont des étiquettes (2) peuvent être prélevées, et
■ une couche d'accrochage (30) sur la couche d'étiquette (20) pour la génération d'une liaison stable entre la couche d'étiquette (20) et une couche d'adhésif (40),
**caractérisée en ce que** la couche d'accrochage (30) est prévue sur la couche d'étiquette (20) dans des zones espacées les unes par rapport aux autres en fonction des étiquettes devant être prélevées.

14. Feuille à gaufrer selon la revendication 13, **caractérisée en ce qu'**une couche d'adhésif (40) est appliquée sur la couche d'accrochage (30).

15. Feuille à gaufrer selon la revendication 14, **caractérisée en ce que** la couche d'adhésif (40) est appliquée sur toute la couche d'accrochage (30) ainsi que sur toutes les zones de la couche d'étiquette (20) se trouvant entre les zones de la couche d'accrochage.

16. Feuille à gaufrer selon la revendication 14, **caractérisée en ce que** la couche d'adhésif (40) est appliquée partiellement et au moins sur la couche d'accrochage (30).

17. Feuille à gaufrer selon une des revendications de 13 à 16, **caractérisée en ce que** les zones se trouvant entre les zones de la couche d'accrochage (30) prévues espacées les unes par rapport aux autres sur la couche d'étiquette (20) sont entièrement enduites d'une couche de séparation (31).

18. Feuille à gaufrer selon une des revendications de 13 à 17, **caractérisée en ce que** la couche d'adhésif (40) consiste en une couche de thermocollant.

19. Feuille à gaufrer selon une des revendications de 13 à 18, **caractérisée en ce que** la couche d'étiquette (20) comporte des structures de diffraction sous forme d'un relief (23).

20. Feuille à gaufrer selon la revendication 19, **caractérisée en ce que** les structures de diffraction sont pourvues au moins partiellement d'une métallisation (22).

21. Feuille à gaufrer selon la revendication 20, **caractérisée en ce que** la métallisation (22) comprend des évidements (24) sous forme de signes, dessins.
